# EUROPÄISCHE PATENTSCHRIFT

(11) **EP 2 558 331 B1**
(45) Veröffentlichungstag und Bekanntmachung des Hinweises auf die Patenterteilung: **25.06.2014**
(21) Anmeldenummer: 11718931.6
(22) Anmeldetag: 08.04.2011
(51) Int. Cl.: B60N 2/22

(54) **SITZVERSTELLVORRICHTUNG**
SEAT ADJUSTMENT APPARATUS
DISPOSITIF DE RÉGLAGE DE SIÈGE

(30) Priorität: 13.04.2010 DE 102010015140
(43) Veröffentlichungstag der Anmeldung: 20.02.2013
(73) Patentinhaber: Keiper GmbH & Co. KG, 67657 Kaiserslautern (DE)
(72) Erfinder: KRAMM, Lars, 67705 Trippstadt (DE); ROSEBOOM, Manfred, 67471 Elmstein (DE)
(74) Vertreter: Wilhelm, Wolfgang
(86) Internationale Anmeldenummer: PCT/EP2011/001744
(87) Internationale Veröffentlichungsnummer: WO 2011/128043

(56) Entgegenhaltungen:
- DE-U1-202007 003 713
- FR-A1- 2 831 228
- JP-A- 2006 305 026

## Beschreibung

Die Erfindung bezieht sich auf eine Sitzverstellvorrichtung zum Verstellen von Sitzelementen eines Sitzes in einem Kraftfahrzeug, wobei an einem Beschlagteil des ersten Sitzelements mittels eines Befestigungselements eine Elektromotor/Getriebeeinheit befestigt ist und mittels der Elektromotor/Getriebeeinheit eine Drehbewegung auf eine Drehachse übertragbar ist.

Durch eine derartige Sitzverstelleinrichtung ist insbesondere die Rückenlehne eines Sitzes in ihrer Neigung relativ zum Sitzkissen verstellbar.

Dazu muß die Elektromotor/Getriebeeinheit an dem Beschlagteil des zu verstellenden Sitzelements befestigt werden.

Aufgabe der Erfindung ist es eine Sitzverstellvorrichtung der eingangs genannten Art zu schaffen, die einfach aufgebaut und leicht montierbar ist.

Diese Aufgabe wird erfindungsgemäß dadurch gelöst, daß das Befestigungselement mit einem Halteelement an der Elektromotor/Getriebeeinheit befestigbar ist und ein durch eine Ausnehmung im Beschlagteil ragendes, eine zu einer Ausnehmung des Beschlagteils axiale Durchgangsöffnung aufweisendes Spreizdübelteil gleichen Querschnitts besitzt, in die ein Spreizelement das Spreizdübelteil radial spreizend einführbar ist.

Derartige Sitzverstellvorrichtung ist aus JP 2006 305026 A bekannt, welches als nächstliegender Stand der Technik angesehen wird.

Nach Anordnung des Befestigungselementes an der Elektromotor/Getriebeeinheit wird durch das Einsetzen des Spreizdübelteils in die Ausnehmung des Beschlagteils und Einführen des Spreizelements in die Durchgangsöffnung des Spreizdübelteils dieses radial gespreizt und gegen die umlaufende Wandung der Ausnehmung des Beschlagteils verklemmt. Damit ist das Befestigungselement und mit ihm die Elektromotor/Getriebeeinheit fest mit dem Beschlagteil des ersten Sitzelements, vorzugsweise der Rückenlehne fest verbunden.

Durch unterschiedliche Befestigungselemente kann dieselbe Elektromotor/Getriebeeinheit für unterschiedliche Sitze zur Anwendung kommen, was die Teile- und Logistikkosten reduziert.

Auch braucht auf kostengünstige Weise bei einem Defekt an dem Befestigungselement nur das Befestigungselement, nicht aber die gesamte Elektromotor/Getriebeeinheit ausgetauscht zu werden.

Um die Elektromotor/Getriebeeinheit nach dem Einführen des Spreizdübelteils in die Ausnehmung des Beschlagteils, aber vor Einführen des Spreizelements montagefreundlich am Beschlagteil zu halten, kann das Spreizdübelteil ein oder mehrere radial nach außen hervorstehende, elastische verformbare Rasten aufweisen, die bei in die Ausnehmung des Beschlagteils vollständig eingeführtem Spreizdübelteil an der der Elektromotor/Getriebeeinheit abgewandten Seite des Beschlagteils in Anlage sind und so ein wieder Herausfallen des Spreizdübelteils aus der Ausnehmung vermeiden. Dies erleichtert das anschließende Einführen des Spreizelements.

Dabei können die Rasten einteilig mit dem Befestigungselement ausgebildet sein.

Einfach und billig beispielsweise durch Kunststoffspritzen herstellbar ist es, wenn das Befestigungselement aus einem Kunststoff besteht und das Spreizelement eine Schraube mit einem Holzschraubengewinde ist, die in die Durchgangsöffnung des Spreizdübelteils einschraubbar ist.

Alternativ kann die Schraube auch ein metrisches Gewinde aufweisen.

Es ist aber auch möglich, daß das Befestigungselement aus einem Metall besteht und das Spreizelement ein Konus ist, der in die Durchgangsöffnung des Spreizdübelteils eintreibbar ist.

Zur Anordnung des Befestigungselements an der Elektromotor/Getriebeeinheit ist es vorteilhaft, wenn das Halteelement des Befestigungselements sich axial zum Spreizdübelteil ein zapfenartig erstreckt und in eine entsprechende Öffnung der Elektromotor/Getriebeeinheit einsetzbar und fixierbar ist.

Um die Elektromotor/Getriebeeinheit verdrehsicher an dem Beschlagteil zu befestigen, weisen das zapfenartige Halteelement und die Öffnung der Elektromotor/Getriebeeinheit einen rotationsunsymmetrischen Querschnitt wie z.B. einen Mehreckquerschnitt oder einen stadionförmigen Querschnitt auf.

Zur einfachen Befestigung des Befestigungselements an der Elektromotor/Getriebeeinheit kann das Befestigungselement im Bereich zwischen dem Spreizdübelteil und dem Halteelement einen Abstandshalter größerer radialer Erstreckung als die durchgehend in der Elektromotor/Getriebeeinheit ausgebildete Öffnung aufweisen, die Schraube mit ihrem Schraubenkopf an dem Mündungsbereich auf der dem Beschlagteil abgewandten Seite der Öffnung der Elektromotor/Getriebeeinheit abgestützt und mit ihrem Gewinde in das Befestigungselement eingeschraubt sein.

Ist darüber hinaus die Schraube mit ihrem Gewinde in die Durchgangsöffnung des Spreizdübelteils oder in den Konus eingeschraubt, so wird montagefreundlich und bauteilsparend mit einer einzigen Schraube sowohl das Befestigungselement an der Elektromotor/Getriebeeinheit als auch durch Spreizen des Spreizdübelteils die gesamte Elektromotor/Getriebeeinheit an dem Beschlagteil des ersten Sitzelements befestigt.

Außerdem sind die Fügerichtung sowohl der Elektromotor/Getriebeeinheit an das Beschlagteil als auch die Einschraubrichtung der Schraube gleich, was zu einer leichten Zugänglichkeit führt und die Montage erleichtert.

Ist die Elektromotor/Getriebeeinheit auf der den Sitzelementen zugewandten Seite des Beschlagteils angeordnet, so kann sie bauraumsparend innerhalb der Rückenlehne angeordnet werden.

Die weitere Funktion der Positionierung der Elektromotor/Getriebeeinheit in einem Abstand zum Beschlagteil wird dadurch erfüllt, daß das Befestigungselement im Bereich zwischen dem Spreizdübelteil und dem Halteelement einen Abstandshalter aufweist, der eine größere radiale Erstreckung als die Ausnehmung des Beschlagteils und die Öffnung der Elektromotor/Getriebeeinheit aufweist, wobei der Abstandshalter zwischen dem Beschlagteil und der Elektromotor/Getriebeeinheit an diesen Elementen anliegend angeordnet ist.

Es kann somit nicht zu störenden Geräuschen durch Scheuem oder Anschlagen der Elektromotor/Getriebeeinheit an dem Beschlag aufgrund von Erschütterungen während des Betriebs des Kraftfahrzeugs kommen.

Vorteilhafterweise weist die Elektromotor/Getriebeeinheit ein Getriebegehäuse auf, wobei das Befestigungselement mit dem Halteelement an dem Getriebegehäuse befestigbar ist. Das Getriebegehäuse enthält dabei vorteilhafterweise die Öffnung, in welche das Halteelement einsetzbar ist.

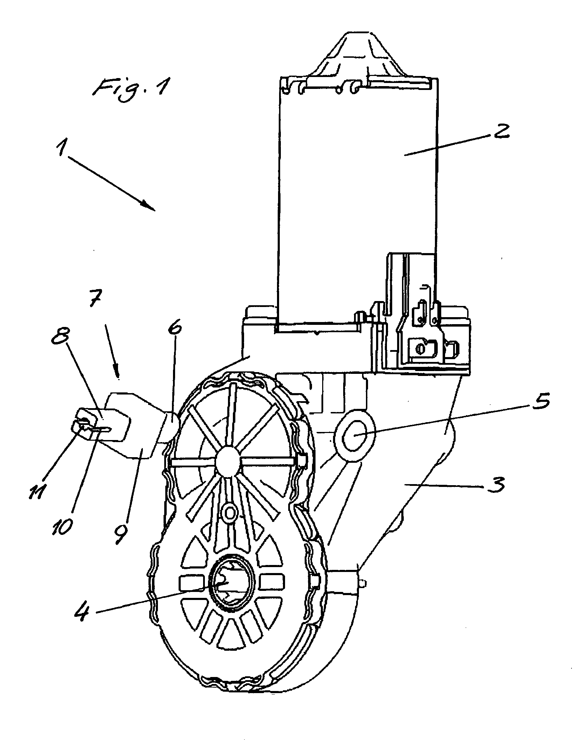

Ein Ausführungsbeispiel der Erfindung ist in der Zeichnung dargestellt und wird im folgenden näher beschrieben. Es zeigen
- Figur 1: eine perspektivische Ansicht einer Elektromotor/Getriebeeinheit mit separatem Befestigungselement
- Figur 2: eine perspektivische Ansicht der Elektromotor/Getriebeeinheit nach Figur 1 mit daran angeordnetem Befestigungselement

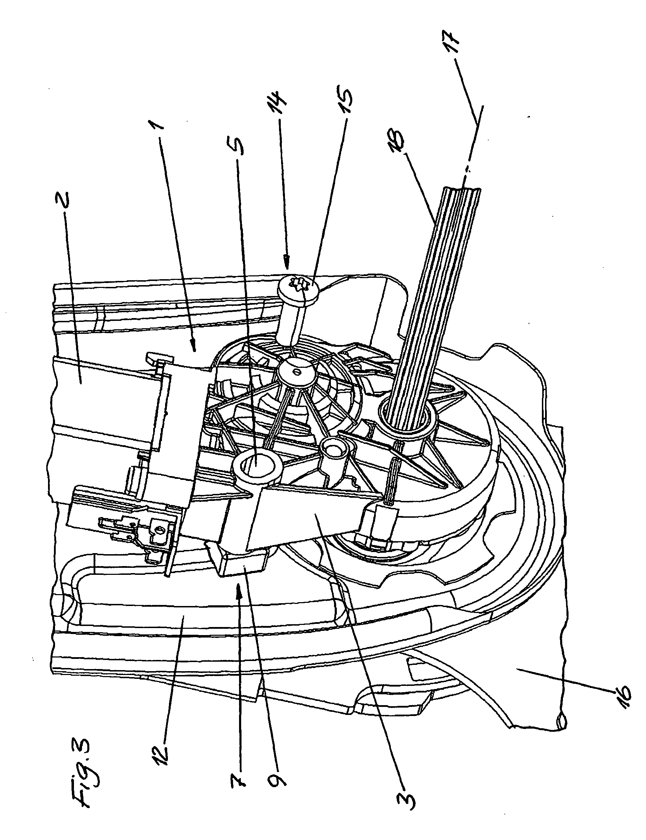

- Figur 3: eine perspektivische Innenansicht einer Sitzverstellvorrichtung mit einer Elektromotor/Getriebeeinheit nach Figur 1 vor Befestigung

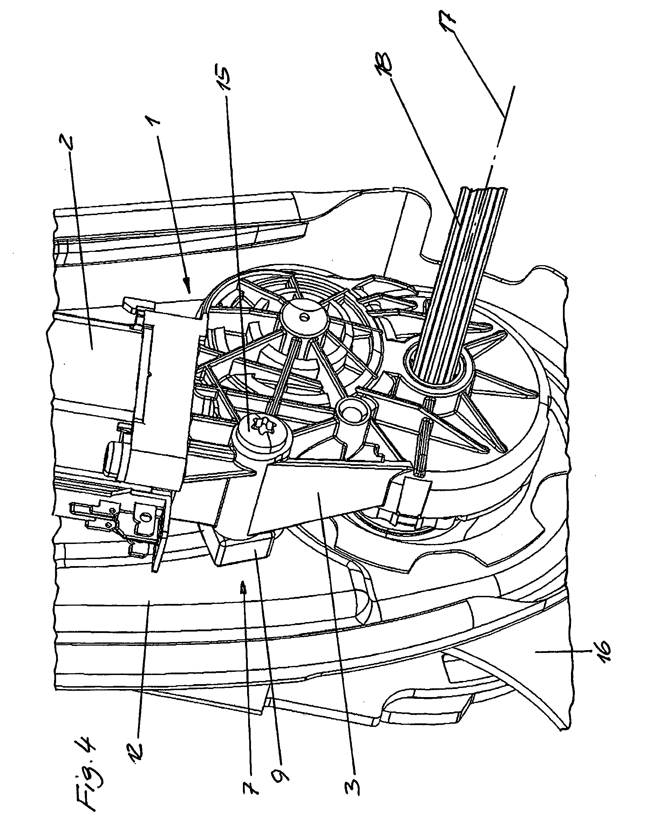

- Figur 4: eine perspektivische Innenansicht der Sitzverstellvorrichtung nach Figur 3 mit befestigter Elektromotor/Getriebeeinheit

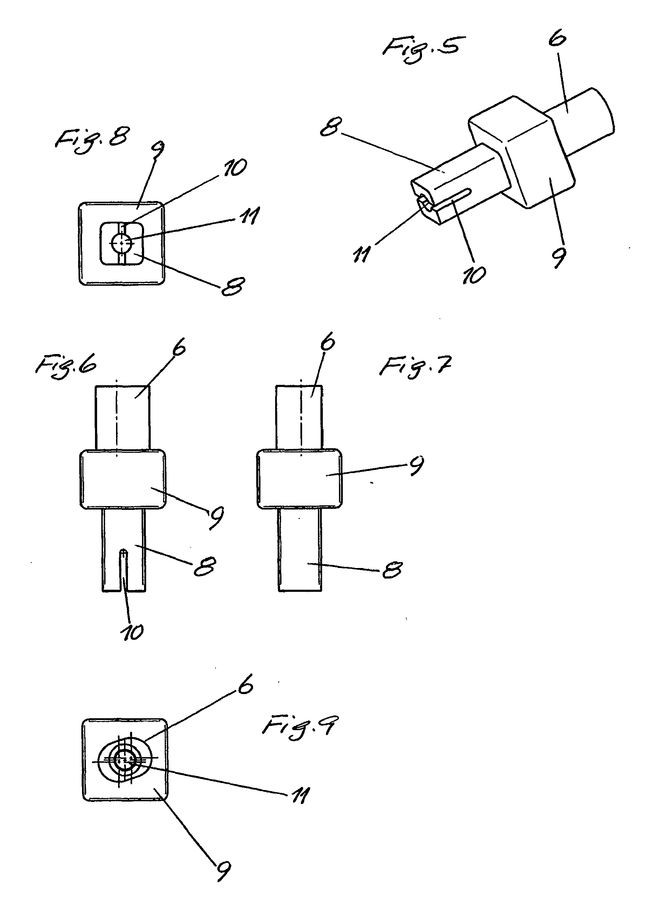

- Figur 5: eine perspektivische Ansicht des Befestigungselements der Sitzverstellvorrichtung nach Figur 3
- Figur 6: eine Ansicht des Befestigungselements nach Figur 5
- Figur 7: eine Seitenansicht des Befestigungselements nach Figur 5
- Figur 8: eine Unteransicht des Befestigungselements nach Figur 5
- Figur 9: eine Draufsicht des Befestigungselements nach Figur 5.

In den Figuren ist eine Elektromotor/Getriebeeinheit 1 dargestellt, die einen Elektromotor 2 und ein daran angekoppeltes Getriebegehäuse 3 umfasst. In dem Getriebegehäuse 3 ist ein von dem Elektromotor 2 antreibbares Getriebe angeordnet, das ein mit einem Innenprofil versehenes Abtriebsrad 4 aufweist.

An dem Getriebegehäuse 3 ist parallel zur Drehachse 17 des Abtriebsrades 4 eine durchgehende Öffnung 5 mit stadionartigem Querschnitt ausgebildet.

In diese Öffnung 5 ist ein zapfenartiges Halteelement 6 gleicher Außenkontur einsetzbar.

Das Halteelement 6 ist ein Teil eines Befestigungselementes 7 aus Kunststoff, das koaxial zum Halteelement 6 ein Spreizdübelteil 8 aufweist, wobei zwischen dem Halteelement 6 und dem Spreizdübelteil 8 ein Abstandshalter 9 quadratischen Querschnitts mit einer größeren radialen Erstreckung als das Halteelement 6 und das Spreizdübelteil 8 ausgebildet ist.

Das Spreizdübelteil 8 besitzt ebenfalls einen quadratischen Querschnitt sowie einen sich etwa über die Hälfte seiner Länge bis zu seinem freien Ende reichenden mittigen Schlitz 10.

Koaxial erstreckt sich durch das Halteelement 6 eine als Stufenbohrung ausgebildete Durchgangsöffnung 11, deren große Stufe sich durch das Halteelement 6 und den Abstandshalter 9 und dessen kleine Stufe sich durch das Spreizdübelteil 8 erstreckt.

Die Rückenlehne des Sitzes eines Kraftfahrzeugs weist an ihren beiden Seitenbereichen jeweils ein mit der Rückenlehne fest verbundenes Beschlagteil 12 auf. In einem der Beschlagteile 12 ist eine durchgehende Ausnehmung zur Aufnahme des Spreizdübelteils 8 ausgebildet.

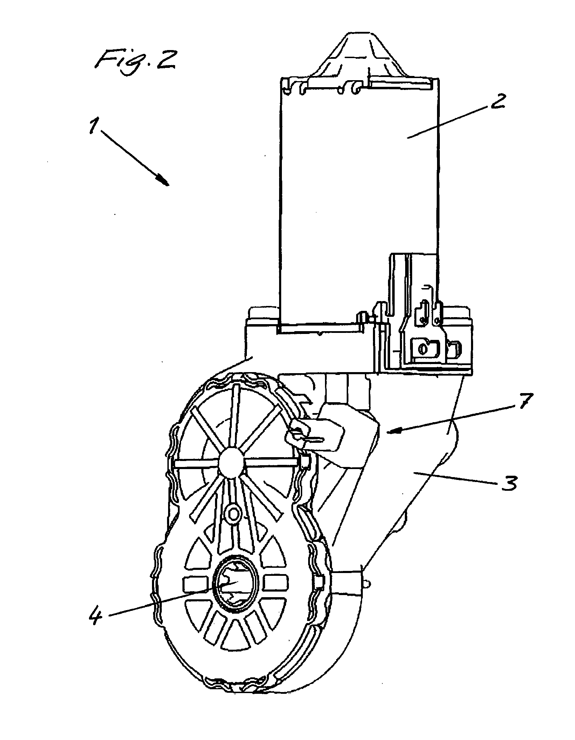

Nach dem Einsetzen des Halteelements 6 in die Öffnung 5 (Figur 2) bis zur Anlage des Abstandshalters 9 am Getriebegehäuse 3 wird die gesamte Baugruppe aus Elektromotor/Getriebeeinheit 1 und Befestigungselement 7 in den Bereich zwischen den beiden Beschlagteilen 12 gebracht und das Spreizdübelteil 8 des Befestigungselements 7 durch die Ausnehmung in dem Beschlagteil 12 hindurchgeführt, bis der Abstandshalter 9 an dem Beschlagteil 12 in Anlage ist.

Die Ausnehmung besitzt den gleichen Querschnitt wie das Spreizdübelteil 8. Von der dem Beschlagteil 12 abgewandten Seite wird eine Schraube 14 mit Holzschraubengewinde durch die große Stufe der Durchgangsöffnung 11 hindurchgeführt und in die kleine Stufe der Durchgangsöffnung 11 eingeschraubt.

Da sich der Schraubenkopf 15 der Schraube 14 am dem dem Beschlagteil 12 abgewandten Mündungsrand der Öffnung 5 abstützt, wird zunächst durch die Schraube 14 das Getriebegehäuse 3 über den Abstandshalter 9 gegen das Beschlagteil 12 gepreßt.

Da der Durchmesser der Schraube 14 größer ist als der Durchmesser der kleinen Stufe der Durchgangsöffnung 11 wird dann das Spreizdübelteil 8 radial gespreizt und gegen die Wandung der Ausnehmung des Beschlagteils 12 gepresst. Dadurch ist die Elektromotor/Getriebeeinheit 1 fest mit dem Beschlagteil 12 verbunden.

Das Beschlagteil 12 ist um eine sich quer zur Längserstreckung des Kraftfahrzeugs erstreckende Achse drehbar und relativ zu einem zweiten Beschlagteil 16 eines Sitzkissens des Sitzes schwenkbar.

Die Achse, um welche das Beschlagteil 12 drehbar ist, erstreckt sich koaxial zu der Drehachse 17 des Abtriebsrad 4 des Getriebes.

Eine Profilwelle 18 mit einem dem Innenprofil des Abtriebsrades 4 entsprechenden Außenprofil ist in das Innenprofil des Abtriebsrades 4 eingesetzt und erstreckt sich koaxial zur Drehachse 17. Die Profilwelle 18 überträgt die von der Elektromotor/Getriebeeinheit 1 erzeugte Drehbewegung zu den beiden an den Seitenbereichen der Rückenlehne des Sitzes befindlichen Beschlagteilen 12.

### Bezugszeichenliste

- 1: Elektromotor/Getriebeeinheit
- 2: Elektromotor
- 3: Getriebegehäuse
- 4: Abtriebsrad
- 5: Öffnung
- 6: Halteelement
- 7: Befestigungselement
- 8: Spreizdübelteil
- 9: Abstandshalter
- 10: Schlitz
- 11: Durchgangsöffnung
- 12: Beschlagteil
- 14: Schraube
- 15: Schraubenkopf
- 16: zweites Beschlagteil
- 17: Drehachse
- 18: Profilwelle

## Patentansprüche

1. Sitzverstellvorrichtung zum Verstellen von Sitzelementen eines Sitzes in einem Kraftfahrzeug, wobei an einem Beschlagteil des ersten Sitzelements mittels eines Befestigungselements eine Elektromotor/Getriebeeinheit befestigt ist und mittels der Elektromotor/Getriebeeinheit eine Drehbewegung auf eine Drehachse übertragbar ist, wobei
das Befestigungselement (7) mit einem Halteelement (6) an der Elektromotor/Getriebeeinheit (1) befestigbar ist und ein durch eine Ausnehmung im Beschlagteil (12) ragendes, eine zu einer Ausnehmung des Beschlagteils (12) axiale Durchgangsöffnung (11) aufweisendes Spreizdübelteil (8) gleichen Querschnitts besitzt, in die ein Spreizelement das Spreizdübelteil (8) radial spreizend einführbar ist, **dadurch gekennzeichnet, daß**
das Halteelement (6) des Befestigungselements (7) sich axial zum Spreizdübelteil (8) zapfenartig erstreckt und in eine entsprechende Öffnung (5) der Elektromotor/Getriebeeinheit (1) einsetzbar und fixierbar ist.

2. Sitzverstellvorrichtung nach Anspruch 1, **dadurch gekennzeichnet, daß** das Spreizdübelteil (8) eine oder mehrere radial nach außen hervorstehende, elastisch verformbare Rasten aufweist, die bei in die Ausnehmung des Beschlagteils (12) vollständig eingeführtem Spreizdübelteil (8) an der der Elektromotor/Getriebeeinheit (1) abgewandten Seite des Beschlagteils (12) in Anlage sind.

3. Sitzverstellvorrichtung nach Anspruch 2, **dadurch gekennzeichnet, daß** die Rasten einteilig mit dem Befestigungselement (7) ausgebildet sind.

4. Sitzverstellvorrichtung nach einem der vorhergehenden Ansprüche, **dadurch gekennzeichnet, daß** das Befestigungselement (7) aus einem Kunststoff besteht und das Spreizelement eine Schraube (14) mit einem Holzschraubengewinde ist, die in die Durchgangsöffnung (11) des Spreizdübelteils (8) einschraubbar ist.

5. Sitzverstellvorrichtung nach einem der Ansprüche 1 bis 3, **dadurch gekennzeichnet, daß** das Befestigungselement (7) aus einem Metall besteht und das Spreizelement ein Konus ist, der in die Durchgangsöffnung (11) des Spreizdübelteils (8) eintreibbar ist.

6. Sitzverstellvorrichtung nach einem der vorhergehenden Ansprüche, **dadurch gekennzeichnet, daß**
das zapfenartige Halteelement (6) und die Öffnung (5) der Elektromotor/Getriebeeinheit (1) einen rotationsunsymmetrischen Querschnitt aufweisen.

7. Sitzverstellvorrichtung nach Anspruch 4, **dadurch gekennzeichnet**
**daß** das Befestigungselement (7) im Bereich zwischen dem Spreizdübelteil (8) und dem Halteelement (6) einen Abstandshalter (9) größerer radialer Erstreckung als die durchgehend in der Elektromotor/Getriebeeinheit (1) ausgebildete Öffnung (5) aufweist, wobei die Schraube (14) mit ihrem Schraubenkopf (15) an dem Mündungsbereich auf der dem Beschlagteil (12) abgewandten Seite der Öffnung (5) der Elektromotor/Getriebeeinheit (1) abgestützt und mit ihrem Gewinde in das Befestigungselement (7) eingeschraubt ist.

8. Sitzverstellvorrichtung nach Anspruch 7, **dadurch gekennzeichnet, daß** die Schraube (14) mit ihrem Gewinde in die Durchgangsöffnung (11) des Spreizdübelteils (8) oder in den Konus eingeschraubt ist.

9. Sitzverstellvorrichtung nach einem der vorhergehenden Ansprüche, **dadurch gekennzeichnet, daß** die Elektromotor/Getriebeeinheit (1) auf der den Sitzelementen zugewandten Seite des Beschlagteils (12) angeordnet ist.

10. Sitzverstellvorrichtung nach einem der vorhergehenden Ansprüche, **dadurch gekennzeichnet, daß** die Elektromotor/Getriebeeinheit (1) ein Getriebegehäuse (3) aufweist, an welchem das Befestigungselement (7) mit dem Halteelement (6) befestigbar ist.

## Claims

1. Seat adjustment apparatus for adjusting seat elements of a seat in a motor vehicle, wherein an electric motor/gear unit is fastened to a fitting part of the first seat element by means of a fastening element and a rotational movement is able to be transmitted to a rotational axis by means of the electric motor/gear unit, wherein the fastening element (7) is able to be fastened by a retaining element (6) to the electric motor/gear unit (1) and has an expansion plug part (8) having the same cross section, protruding through a recess in the fitting part (12) and comprising a through-opening (11), which is axial relative to a recess of the fitting part (12), into which through-opening an expansion element radially expanding the expansion plug part (8) is able to be inserted, **characterized in that** the retaining element (6) of the fastening element (7) extends axially relative to the expansion plug part (8) in the manner of a pin and is able to be inserted and fixed into a corresponding opening (5) of the electric motor/gear unit (1).

2. Seat adjustment apparatus according to Claim 1, **characterized in that** the expansion plug part (8) comprises one or more resiliently deformable catches protruding radially outward and which, when the expansion plug part (8) is fully inserted into the recess of the fitting part (12), bear against the side of the fitting part (12) remote from the electric motor/gear unit (1).

3. Seat adjustment apparatus according to Claim 2, **characterized in that** the catches are configured integrally with the fastening element (7).

4. Seat adjustment apparatus according to one of the preceding claims, **characterized in that** the fastening element (7) consists of plastics material and the expansion element is a screw (14) with a wooden screw thread, which may be screwed into the through-opening (11) of the expansion plug part (8).

5. Seat adjustment apparatus according to one of Claims 1 to 3, **characterized in that** the fastening element (7) consists of a metal and the expansion element is a cone which may be driven into the through-opening (11) of the expansion plug part (8).

6. Seat adjustment apparatus according to one of the preceding claims, **characterized in that** the pin-like retaining element (6) and the opening (5) of the electric motor/gear unit (1) have a non-rotationally symmetrical cross section.

7. Seat adjustment apparatus according to Claim 4, **characterized in that**, in the region between the expansion plug part (8) and the retaining element (6), the fastening element (7) has a spacer (9) of greater radial dimension than the opening (5) formed continuously in the electric motor/gear unit (1), wherein the screw (14) is supported with its screwhead (15) on the opening region on the side of the opening (5) of the electric motor/gear unit (1) remote from the fitting part (12), and is screwed with its thread into the fastening element (7).

8. Seat adjustment apparatus according to Claim 7, **characterized in that** the screw (14) is screwed with its thread into the through-opening (11) of the expansion plug part (8) or into the cone.

9. Seat adjustment apparatus according to one of the preceding claims, **characterized in that** the electric motor/gear unit (1) is arranged on the side of the fitting part (12) facing the seat elements.

10. Seat adjustment apparatus according to one of the preceding claims, **characterized in that** the electric motor/gear unit (1) comprises a gear housing (3) to which the fastening element (7) may be fastened by the retaining element (6).

## Revendications

1. Dispositif de réglage de siège pour le réglage d'éléments de siège d'un siège dans un véhicule automobile, un moteur électrique / une unité de transmission étant fixé(e) au moyen d'un élément de fixation à une partie de ferrure du premier élément de siège et un mouvement de rotation pouvant être transmis à un axe de rotation au moyen du moteur électrique / de l'unité de transmission,
l'élément de fixation (7) pouvant être fixé au moyen d'un élément de retenue (6) au moteur électrique / à l'unité de transmission (1) et possédant une partie de cheville à expansion (8) de même section transversale faisant saillie à travers un évidement dans la partie de ferrure (12), présentant une ouverture de passage axiale (11) par rapport à un évidement de la partie de ferrure (12), dans laquelle ouverture de passage peut être introduit un élément d'expansion écartant radialement la partie de cheville à expansion (8), **caractérisé en ce que** l'élément de retenue (6) de l'élément de fixation (7) s'étend en forme de tourillon axialement par rapport à la partie de cheville à expansion (8) et peut être inséré et fixé dans une ouverture correspondante (5) du moteur électrique / de l'unité de transmission (1).

2. Dispositif de réglage de siège selon la revendication 1, **caractérisé en ce que** la partie de cheville à expansion (8) présente une ou plusieurs griffes déformables élastiquement faisant saillie radialement vers l'extérieur, lesquelles, lorsque la partie de cheville à expansion (8) est complètement introduite dans l'évidement de la partie de ferrure (12), sont en appui contre le côté de la partie de ferrure (12) opposé au moteur électrique / à l'unité de transmission (1).

3. Dispositif de réglage de siège selon la revendication 2, **caractérisé en ce que** les griffes sont réalisées d'une seule pièce avec l'élément de fixation (7).

4. Dispositif de réglage de siège selon l'une quelconque des revendications précédentes, **caractérisé en ce que** l'élément de fixation (7) se compose de plastique et l'élément d'expansion est une vis (14) avec un filetage de vis à bois, qui peut être vissée dans l'ouverture de passage (11) de la partie de cheville à expansion (8).

5. Dispositif de réglage de siège selon l'une quelconque des revendications 1 à 3, **caractérisé en ce que** l'élément de fixation (7) se compose de métal et l'élément d'expansion est un cône qui peut être enfoncé dans l'ouverture de passage (11) de la partie de cheville à expansion (8).

6. Dispositif de réglage de siège selon l'une quelconque des revendications précédentes, **caractérisé en ce que** l'élément de retenue en forme de tourillon (6) et l'ouverture (5) du moteur électrique / de l'unité de transmission (1) présentent une section transversale dépourvue de symétrie de révolution.

7. Dispositif de réglage de siège selon la revendication 4, **caractérisé en ce que** l'élément de fixation (7), dans la région entre la partie de cheville à expansion (8) et l'élément de retenue (6), présente un élément d'écartement (9) de plus grande étendue radiale que l'ouverture (5) réalisée de manière continue dans le moteur électrique / l'unité de transmission (1), la vis (14) s'appuyant avec sa tête de vis (15) contre la région d'embouchure du côté de l'ouverture (5) du moteur électrique / de l'unité de transmission (1) opposé à la partie de ferrure (12) et étant vissée avec son filetage dans l'élément de fixation (7).

8. Dispositif de réglage de siège selon la revendication 7, **caractérisé en ce que** la vis (14) est vissée avec son filetage dans l'ouverture de passage (11) de la partie de cheville à expansion (8) ou dans le cône.

9. Dispositif de réglage de siège selon l'une quelconque des revendications précédentes, **caractérisé en ce que** le moteur électrique / l'unité de transmission (1) est disposé(e) du côté de la partie de ferrure (12) tourné vers les éléments de siège.

10. Dispositif de réglage de siège selon l'une quelconque des revendications précédentes, **caractérisé en ce que** le moteur électrique / l'unité de transmission (1) présente un boîtier de transmission (3) sur lequel l'élément de fixation (7) peut être fixé avec l'élément de retenue (6).
